# EUROPEAN PATENT SPECIFICATION

(11) **EP 3 487 216 B1**
(45) Date of publication and mention of the grant of the patent: **18.03.2020**
(21) Application number: 17202623.9
(22) Date of filing: 20.11.2017
(51) Int. Cl.: H04W 36/00, H04W 48/18, H04W 36/14

(54) **METHOD FOR PROVIDING A COMMUNICATION SERVICE, COMMUNICATION NETWORK COMPONENT AND MOBILE TERMINAL**
VERFAHREN ZUR BEREITSTELLUNG EINES KOMMUNIKATIONSDIENSTES, KOMMUNIKATIONSNETZKOMPONENTE UND MOBILES ENDGERÄT
PROCÉDÉ POUR FOURNIR UN SERVICE DE COMMUNICATION, COMPOSANT DE RÉSEAU DE COMMUNICATION ET TERMINAL MOBILE

(43) Date of publication of application: 22.05.2019
(73) Proprietor: NTT DOCOMO, INC., Chiyoda-ku Tokyo 100-6150 (JP)
(72) Inventor: SAMA, Malla Reddy, 80687 Munich (DE); THAKOLSRI, Srisakul, 80687 Munich (DE); MUTIKAINEN, Jari, 80687 Munich (DE); GUERZONI, Riccardo, 80687 Munich (DE); MINOKUCHI, Atsushi, 80687 Munich (DE)
(74) Representative: Viering, Jentschura & Partner mbB Patent- und Rechtsanwälte

(56) References cited:
- HUAWEI ET AL: "OI#4b: TS 23.501: Network slicing interworking with eDécor", 3GPP, vol. SA WG2, 17 October 2017 (2017-10-17), XP055453458,
- QUALCOMM INCORPORATED: "TS 23.501 - Interworking between 5GC slicing mechanisms and eDecor", 3GPP DRAFT; S2-175769_TS23.501 SLICING - EDECOR-V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sophia Antipolis, France; 20170821 - 20170825 21 August 2017 (2017-08-21), XP051325617, Retrieved from the Internet: URL:http://www.3gpp.org/ftp/Meetings_3GPP_ SYNC/SA2/Docs/ [retrieved on 2017-08-21]
- NTT DOCOMO: "OI#11: TS 23.501: Network slicing and Interworking with EPS", 3GPP DRAFT; S2-178807_SLICING_INTERWORKINGR3.1-R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Reno, USA; 20171127 - 20171201 21 November 2017 (2017-11-21), XP051379811, Retrieved from the Internet: URL:http://www.3gpp.org/tsg_sa/WG2_Arch/TS GS2_124_Reno/Docs/S2-178807_Slicing_interw orkingr3.1-r2.doc [retrieved on 2017-11-21]

## Description

The present disclosure relates to methods for providing a communication service and communication network components. A core network of a mobile radio communication network according to 5G typically comprises multiple core network slices, wherein each core network slice serves for providing a certain communication service, such as V2X (Vehicle-to-Everything) or eMBB (enhanced Mobile Broadband). In a mobile terminal (UE) 102 operating according to 5G, i.e. acting as a subscriber terminal of a 5G mobile communication network, each application intending to use a communication service provided by the 5G mobile communication network is associated with an S-NSSAI (Single Network Slice Selection Assistance information) which identifies a network slice. However, in a mobile terminal (UE) operating according to 4G, i.e. acting as a subscriber terminal of a 4G mobile communication network, each application intending to use a communication service provided by the 4G mobile communication network is associated with an access point name, rather than an S-NSSAI since network slice instances are not provided according to 4G.

For the case that a mobile terminal moves from a 4G communication network to a 5G communication network, a mechanism is therefore desirable which allows associating an application using a communication service with an S-NSSAI such that the application can continue using the communication service via the 5G communication network.

3GPP contribution S2-177318, Huawei/HiSilicon, "OI#4b: TS 23.501: Network slicing interworking with eDecor" discloses a procedure where an MME stores mapping between EPC DCN-ID and APN to 5GC DNN and S-NSSAI. During PDN connection establishment procedure the MME determines S-NSSAI based on the stored mapping and sends it to the UE. When the UE moves to the 5G radio network, it uses the assigned S-NSSAI to inform the 5GC to which slice each EPC PDN connection will be moved. In one alternative, the procedure may be performed by a PGW-C+SMF. In another, preferred, alternative, the procedure may be performed by an AMF during registration or PDU session establishment after the UE has moved to 5G.

3GPP contribution S2-175769, Qualcomm, "TS 23.501 - Interworking between 5GC slicing mechanisms and eDecor" discloses a procedure where during a 5GC registration a UE receives from an AMF allowed NSSAI and a corresponding interworking DCN-ID of EPC. Once the UE moves to the LTE/EPC it sends the DCN-ID to E-UTRAN for selection of the corresponding DCN.

The invention is defined by the appended claims.

According to one example, a method for providing a communication service is provided comprising a mobile terminal running an application, a first communication network providing a communication service to the application using a bearer between the mobile terminal and a core network of the first communication network; the first communication network transmitting to the mobile terminal an identification of a core network slice of a second communication network, wherein the core network slice is to be used when providing the communication service to the application by means of the second communication network; and the mobile terminal using the communication service based on the core network slice of the second communication network.
Furthermore, a communication network component and a mobile terminal according to the above method are provided according to further examples.
In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: illustrates the association of applications with access point names in 4G and the association of applications with S-NSSAIs (Single Network Slice Selection Assistance information) in 5G.
- Figure 3: shows a communication arrangement.
- Figure 4: shows a flow diagram illustrating and example of transmission of slicing mapping information in a 4G attach procedure.
- Figure 5: shows a flow diagram illustrating a procedure for EPS (Evolved Packet System) to 5GS (5G System) idle mode mobility.
- Figure 6: shows a flow diagram illustrating a method for providing a communication service.
- Figure 7: shows a communication network component.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

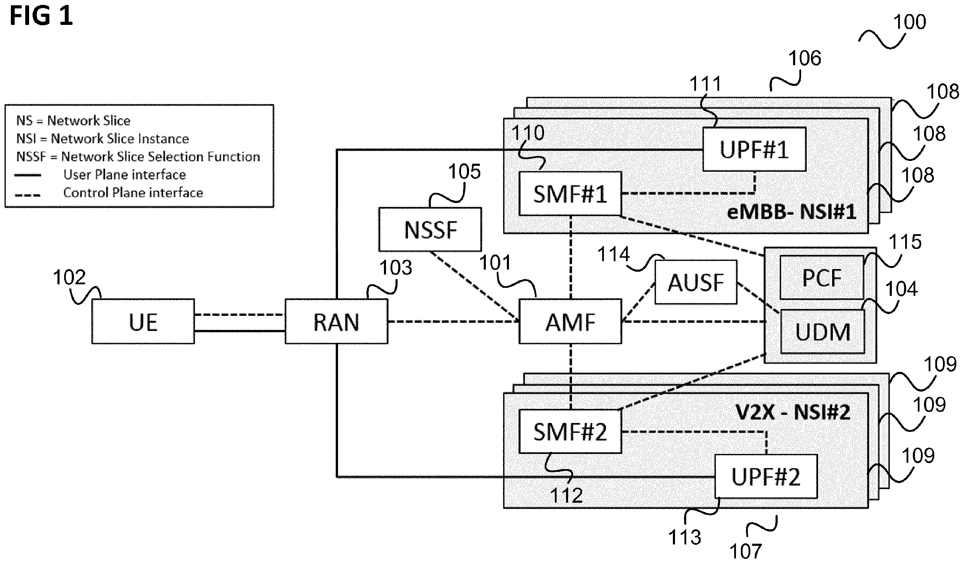

Figure 1 shows a radio communication system according to 5G.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network.

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the radio communication terminal device 102 over an air interface. It should be noted that the radio access network 103 may include any number of radio access network nodes.

The radio communication system 100 further includes a core network including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network further comprises an AUSF (Authentication Server Function) 114 and a PCF (Policy Control Function) 115.

The core network may have multiple network slices 106, 107 and for each network slice 106, 107, the operator may create multiple network slice instances (NSIs) 108, 109. In this example, the core network comprises a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in this example, each instance 108 of the first core network slice 106 comprises a first Session Management Function (SMF) 110 and a first User Plane Function (UPF) 111 and each instance 109 of the second core network slice 107 comprises a second Session Management Function (SMF) 112 and a second User Plane Function (UPF) 113.

In a mobile terminal (UE) 102 operating according to 5G, i.e. acting as a subscriber terminal of a 5G mobile communication network, each application intending to use a communication service provided by the 5G mobile communication network is associated with an S-NSSAI.

An S-NSSAI (Single Network Slice Selection Assistance information) identifies a network slice and is comprised of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

The NSSAI is a collection of S-NSSAIs.

An allowed NSSAI is an NSSAI provided by the serving PLMN (Public Land Mobile Network) during e.g. a registration procedure, indicating the NSSAI allowed by the network for a UE in the serving PLMN for the current registration area.

A configured NSSAI is an NSSAI that has been provisioned in the UE. A requested NSSAI is the NSSAI that the UE may provide to the network. A subscribed S-NSSAI is an S-NSSAI based on subscriber information, which a UE is subscribed to use in a PLMN.

However, in a mobile terminal (UE) operating according to 4G, e.g. a 5G mobile terminal which is connected to a 4G network, i.e. acting as a subscriber terminal of a 4G mobile communication network, each application intending to use a communication service provided by the 4G mobile communication network is associated with an access point name, rather than an S-NSSAI since network slice instances are not provided according to 4G.

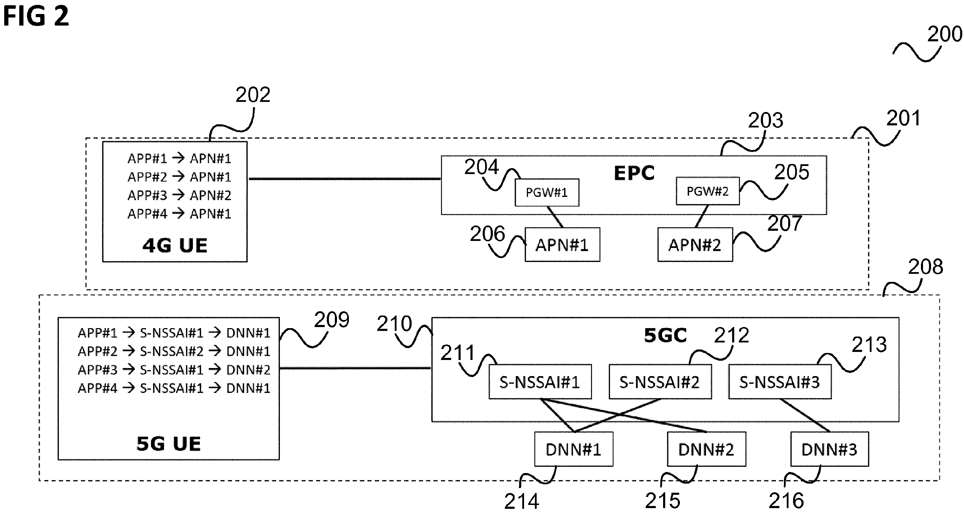

Figure 2 illustrates the association of applications with access point names in 4G and the association of applications with S-NSSAIs in 5G.

A 4G mobile communication system 201 comprises a 4G UE 202, i.e. a UE operating according to 4G, and an EPC (evolved packet core) 203, i.e. a 4G core network. The EPC 203 comprises a first PGW (Packet Data Network Gateway) 204 and a second PGW 205. The first PGW 204 is connected to a gateway with a first APN (Access Point Name) APN#1 206 and the second PGW 205 is connected to a gateway with a second APN APN#2 207. The APN gateways 206, 207 are for example gateways between the 4G communication system 201 and the Internet.

In this example, four applications denoted as APP#1 to APP#4 are running on the 4G UE 202. For being able to use communication services (e.g. Internet access) provided by the 4G mobile communication network (whose core network is the EPC 203) each application is associated with either APN#1 or APN#2.

The 4G UE 202 has a connection to each of the PGWs 204, 205 by means of a respective EPS (Evolved Packet System) Bearer. Each EPS Bearer provides a bearer service, i.e. a transport service with specific QoS (Quality of Service) attributes. The QoS parameters associated to a bearer are QCI (QoS Class Identifier), ARP (Allocation and Retention Priority), GBR (Guaranteed Bit Rate) and AMBR (Aggregate Maximum Bit Rate). It should be noted that thus, an association of one or more application(s) with an APN corresponds to an association of one or more application(s) with an EPS bearer.

A 5G mobile communication system 208 comprises a 5G UE 209, i.e. a UE operating according to 5G, and a 5G core network (5GC) 210. The 5GC 210 comprises a first network slice 211, identified by a S-NSSAI#1, a second network slice 212, identified by a S-NSSAI#2 and a third network slice 213, identified by a S-NSSAI#3. The first network slice 211 is connected to a first data network 214 identified by a first data network name DNN#1 and to a second data network 215 identified by a second data network name DNN#2, the second network slice 212 is connected to the first data network 214 and the third network slice 213 is connected to a third data network 216 identified by a third data network name DNN#3.

Four applications denoted as APP#1 to APP#4 are running on the 5G UE 209. For being able to use communication services (e.g. Internet access) provided by the 5G mobile communication network (whose core network is the 5GC 210) each application is associated with either S-NSSAI#1 or NSSAI #2 and with a DNN of a data network connected to the respective network slice.

The 5G UE 209 has a NSSP (Network Slice Selection Policy) function which maps each application to an S-NSSAI. The NSSP is provided by the 5GC 210.

The situation may arise that a 4G UE 202 moves to a 5G UE 209, such as in case of a handover of a UE from a 4G mobile communication network to a 5G mobile communication network. A mechanism is desirable which allows the UE (e.g. having two EPS bearers established) to map 1-to-1 or 1-to-N or N-to-N between the EPS bearer and the 5GC S-NSSAI.

The EPC 203 may allocate 5G parameters corresponding to a PDN (Packet Data Network) connection, e.g. Session AMBR and QoS rules, are allocated by a PGW-C+SMF (PGW-Control Plane + SMF) and sent to the UE via PCO (Protocol Configuration Options). For example, PGW-C+SMF determines the S-NSSAI for a EPS bearer based on a combination of the PGW-C+SMF address and the APN address. The aim of this is to follow the principles of the legacy handover procedures. It means that there is no NAS level communication between the UE and the network during a handover and that the UE must be aware of the QoS parameters in the target system prior the handover, in order to continue to send UL data in seamless manner in the target system. PCO is a transparent container between UE and PGW. It is used to carry the QoS parameters, which may include EPS QoS parameters and its corresponding 5G System QoS parameters, from PGW to the UE during the PDN connection establishment and modification.

In case, a PGW-C+SMF serves multiple EPS bearers that are appointed to the same APN, but each EPS bearer is associated with a different S-NSSAI, which is allocated by the same PGW-C+SMF. To enable the PGW-C+SMF to be able to differentiate those EPS bearer and be able to allocate different S-NSSAI for those EPS bearers, in such case, during the EPS bearer establishment procedure in EPC, the UE needs to send an additional parameter that differentiates the difference of EPS bearers to establish (e.g., different QoS parameters for different EPS bearer). One approach for PDU session mapping in a UE in case of a handover from 4G to 5G is that the UE maintains a slice mapping for the PDU sessions (UE uses the NSSP to identify the S-NSSAI associated to the APN corresponding to the PDN connection). A 5GC capable UE may use the NSSP both when connected to the 5GC and when connected to the EPC. However, this requires a static configuration in the UE i.e. S-NSSAI mapped to APN and is not possible in a case where multiple core network slices are connected to the same APN gateways.

Another approach for PDU session mapping in a UE in case of handover from 4G to 5G is that the AMF determines the related S-NSSAIs based on the AMF set ID (Allowed NSSAI), and PGW-C/SMF ID and provides the (DNN, S-NSSAI) pair to the UE during the registration procedure. More dynamic mapping of information is provided by the 5GC during the registration procedure. However, it is not efficient in case of handover in connected mode, since for some time there is no NAS signalling between the UE and 5GC. In this period, for any new application intending to establish a PDU session, the UE does not know whether it needs to use an existing (in the UE) S-NSSAI or a new S-NSSAI since UE has not received yet the mapping information from the 5GC. Furthermore, for RAN slicing, the UE needs to send the S-NSSAI to the RAN, since the RAN does not receive slice information from the AMF such that this approach does not work.

In the following, embodiments are described in which the EPC provides the UE with the mapping of an EPS bearer to an S-NSSAI.

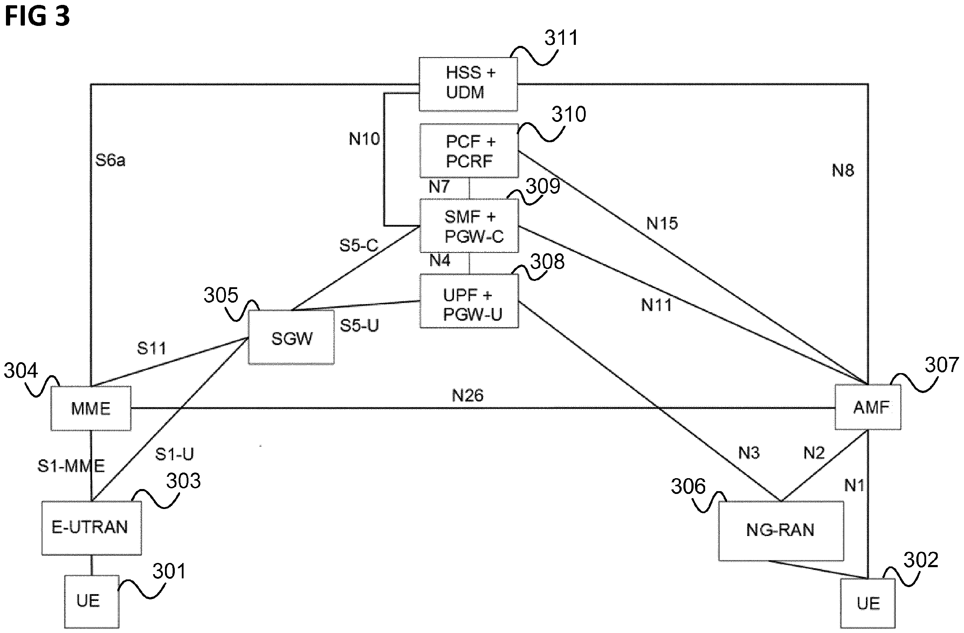

Figure 3 shows a communication arrangement 300.

Similarly to figure 2, the communication arrangement 300 comprises a 4G UE 301 and a 5G UE 302, which may be the same mobile terminal at first operating as 4G UE 301 and, after moving or a handover, operating as 5G UE 302, i.e. the UEs 301, 302 may be the same UE, first connected to a 4G mobile communication network and then to a 5G mobile communication network.

The 4G UE 301 is connected via a 4G radio access network 303, i.e. an E-UTRAN (evolved UMTS (Universal Mobile Telecommunications System) Terrestrial Radio Access Network) to an MME (Mobility Management Entity) 304 and a SGW (Serving Gateway) 305 which are part of a 4G core network.

The 5G UE 302 is connected to a 5G radio access network 306 and an AMF 307 which are part of a 5G core network.

The communication arrangement 300 comprises components which combine 4G and 5G functionalities and can be seen to belong both the 4G core network and the 5G core network. These include a UPF + PGW-U (PGW User Plane) 308, an SMF + PGW-C 309, a PCF + PCRF (Policy and Charging Rules Function) 310 and an HSS (Home Subscriber Server) + UDM (Unified Data Management) 311.

The SGW 305 is connected to the SMF + PGW-C 309 and the UPF + PGW-U 308. The MME 304 is connected to the HSS + UDM 311. The AMF 307 is connected to the PCF PCRF 310, the HSS + UDM 311 and the SMF + PGW-C 309. The 5G RAN 306 is connected to the UPF + PGW-U 308.

Furthermore, the MME 304 and the AMF 307 are connected.

According to one embodiment, when the UE 301 establishes an EPS bearer in the 4G communication system, the UE 301 includes in the PDU session ID for 5G interworking and sends it to the PGW-C+SMF 309 via PCO. The PGW-C+SMF409 allocates 5G parameters corresponding to the EPS bearer to be established, e.g. Session AMBR, S-NSSAI (represent slice type) and QoS rules, and sends them to the UE via PCO.

The UE 301 stores the 5G parameters and uses them when it is handed over from 4G to 5G (i.e. from the EPS to the 5G system). The UE 301 maintains the mapping of S-NSSAI (provided by the PGW-C+SMF via PCO) and APN.

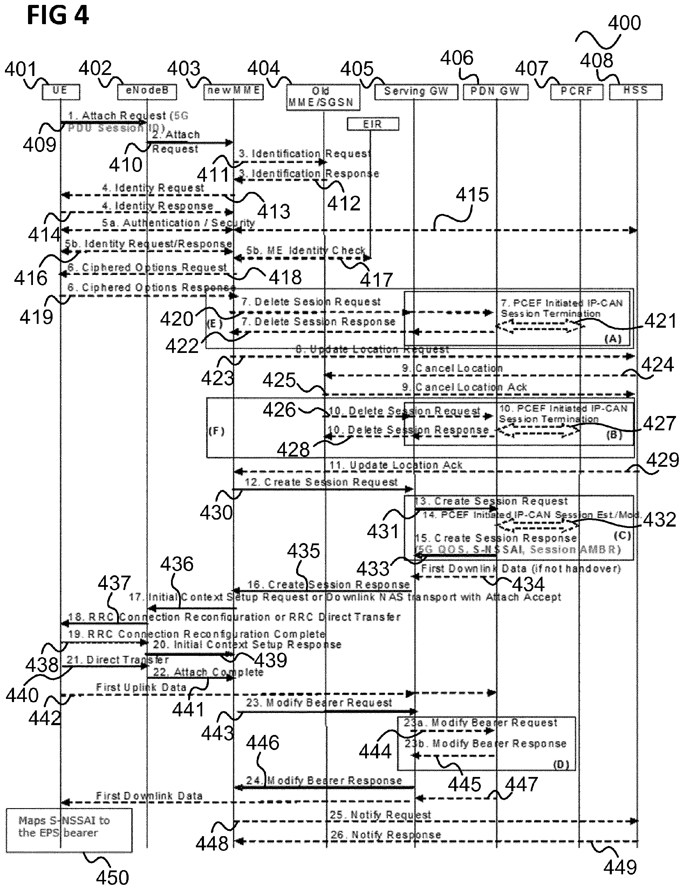

Figure 4 shows a flow diagram 400 illustrating and example of transmission of slicing mapping information in a 4G attach procedure.

The flow takes place between a UE 401, an eNodeB 402, a new MME 403 (to which the UE 401 attaches), an old MME/SGSN 404, an SGW 405, a PGW 406, a PCRF 407 and an HSS 408.

In 409, the UE 401 sends an Attach request to the eNodeB 402 which the eNodeB 402 forwards to the new MME 403 in 410. In 411, the new MME 403 sends an identification request to the old MME/SGSN 404 to which the old MME/SGSN 404 responds in 412.

In 413, the new MME 403 sends an identification request to the UE 401 to which the UE 401 responds in 414.

In 415, the UE 401 and the new MME 403 perform authentication and security setup (including accessing the HSS 408, e.g. for subscriber information).

In 416, there is an identity request/response exchange between the UE 401 and the new MME 403 and in 417 and ME identity check exchange with an EIR (Equipment Identity Register).

In 418, the new MME 403 sends a ciphered options request to the UE 401 to which the UE 401 responds in 419.

In 420, the new MME 403 sends a delete session request to the PGW 406 via the SGW 405. In 421, the PGW 406 and the PCRF 407 perform a PCEF Initiated IP-CAN Session Termination. In 422, the PGW 406 sends a delete session response to the new MME 403 via the SGW 405.

In 423, the new MME 403 sends an update location request to the HSS 408. The HSS 408 sends, in 424, a cancel location message to the old MME/SGSN 404 which the old MME/SGSN 404 acknowledges in 425.

In 426, the old MME 403 sends a delete session request to the PGW 406 via the SGW 405. In 427, the PGW 406 and the PCRF 407 perform a PCEF Initiated IP-CAN Session Termination. In 428, the PGW 406 sends a delete session response to the old MME 403 via the SGW 405.

In 429, the HSS 408 sends an update location acknowledgement to the new MME 403.

In 430, the new MME 403 sends a create session request to the SGW 405 which the SGW 405 forwards to the PGW 406 in 431. In 432, the PGW 406 and the PCRF 407 perform a PCEF Initiated IP-CAN Session Establishment/Modification.

In 433, the PGW 406 sends a create session response to the SGW 405. Along with other 5G parameters i.e. QoS, Session AMBR, the PGW 406 (i.e. corresponding to a PGW-C/SMF) provides also the mapped S-NSSAI for the EPS bearer (providing the connection between 401 and PGW 406) to the UE via PCO.

In 434, if there is no handover, the PGW 406 sends first downlink data to the SGW 405.

In 435, the SGW 405 forwards the create session response to the new MME 403. In 436, the new MME 403 sends an initial context setup request or downlink NAS transport with attach accept to the eNodeB 402.

In 437, the eNodeB 402 sends an RRC connection reconfiguration or RRC direct transfer to the UE 401, to which the UE responds in 438.

In 439, the eNodeB sends an initial context setup response to the new MME 403.

In 440, the UE sends a direct transfer to the eNodeB 402 and in 441 the eNodeB 402 sends an attach complete message to the new MME 403.

In 442, the UE 401 sends first uplink data to the PGW 406 via the SGW 405.

In 443, the new MME 403 sends a modify bearer request to the SGW 405 which the SGW 405 forwards in 444 to the PGW 406 and to which the PGW 406 responds in 445.

In 446, the SGW 405 sends a modify bearer response to the new MME 403 and in 447, the PGW 406 sends first downlink data to the UE 401 via the SGW 405.

In 448, the new MME 403 sends a notify request to the HSS 408 to which the HSS 408 responds in 449.

In 450, the UE 401 maps the S-NSSAI (included in the create session response of 433 and communicated to the UE 401 in 435, 436 and 437) to the EPS Bearer.

The UE 401 may use the mapped S-NSSAI for a handover to 5G.

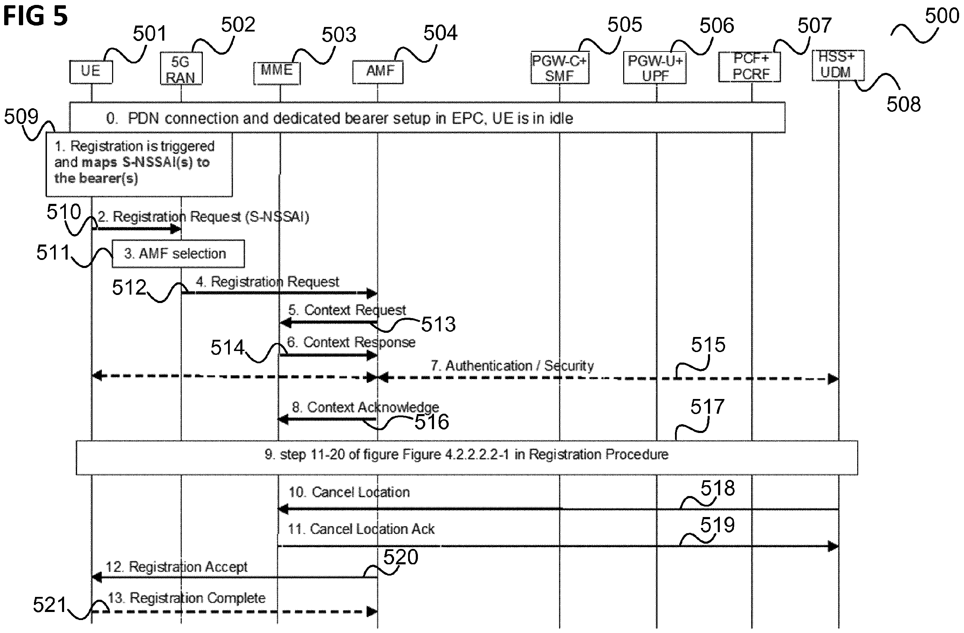

Figure 5 shows a flow diagram 500 illustrating a procedure for EPS to 5GS idle mode mobility.

The flow takes place between a UE 501, e.g. corresponding to UE 401, a 5G RAN 502, an MME 503, e.g. corresponding to new MME 403, an AMF 504, a PGW-C + SMF 505 and a PGW-U + UPF 506 (e.g. together implementing PGW 406), a PCF + PCRF 507, e.g. implementing PCRF 407 and a HSS + UDM 508.

It is assumed that a setup of a PDN connection and dedicated bearer setup has been performed in the EPC and that the UE 501 is in idle mode.

It is assumed that in 509, a registration is triggered (due to handover from 4G to 5G). When a UE handover from EPS to 5GS is triggered during idle mode, the UE 501 maps the S-NSSAI(s) received from the PGW-C, e.g. the PGW 406 in figure 4, to the applications running on the UE which are served by means of the bearers mapped to the S-NSSAI(s).

In 510, the 501 sends the one or more S-NSSAIs mapped to the applications as Requested NSSAI to the 5G RAN 502 in a Registration Request.

In 511, the RAN 502 performs AMF selection and forwards the Registration Request to the AMF 504 to the selected AMF 504 in 512. The RAN 502 may use the Requested NSSAI for AMF selection if the GUTI (Globally Unique Temporary ID) is not valid or does not identify the right AMF.

In 513, the AMF 504 sends a context request to the MME 503 and in 514, the MME 503 sends a context response 514 to the AMF 504.

In 515, the AMF 504 and the UE 501 perform authentication and security setup (involving accessing the HSS + UDM 508).

In 516, the AMF 504 sends a context acknowledgement message to the MME 503.

In 517, further registration procedure steps (according to 3GPP) are performed.

In 518, the HSS + UDM 508 sends a cancel location message to the MME 503 to which the MME 503 responds in 519.

In 520, the AMF 504 sends a registration accept message to the UE 501 and the UE 501 responds with a registration complete message in 521. In 520, the AMF 504 may send a new S-NSSAI mapping information to the UE 501 as part of 5G registration e.g. Allowed NSSAI (which represent the allowed slices for a UE in the registration area). In this case, the UE 501 will override existing mapping information (received from the PGW-C, e.g. the PGW 406 in figure 4) with the new mapping information.

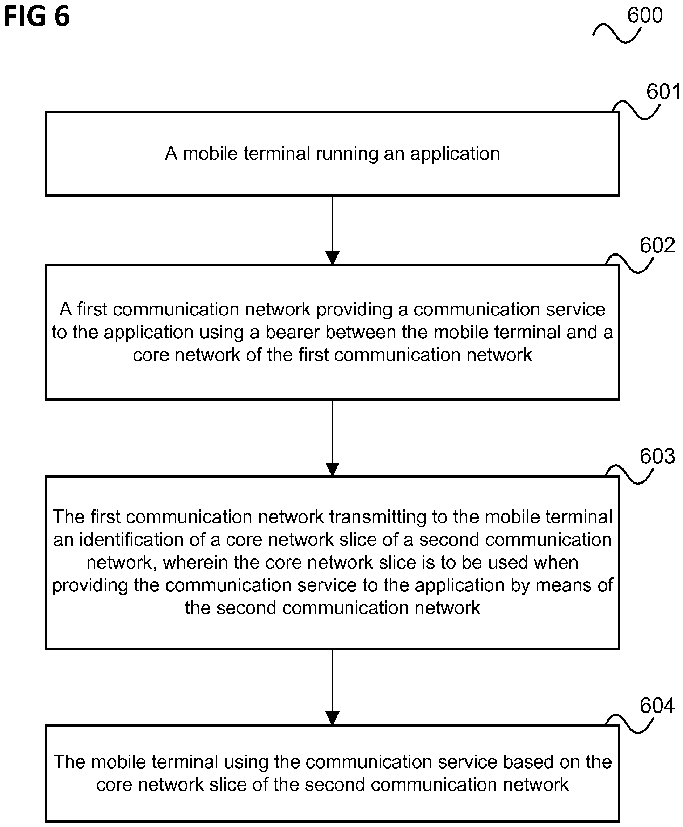

In summary, according to various embodiments, a method for providing a communication service is provided as illustrated in figure 6.

Figure 6 shows a flow diagram 600 illustrating a method for providing a communication service.

In 601, a mobile terminal runs an application.

In 602, a first communication network provides a communication service to the application using a bearer between the mobile terminal and a core network of the first communication network.

In 603, the first communication network transmits to the mobile terminal an identification of a core network slice of a second communication network, wherein the core network slice is to be used when providing the communication service to the application by means of the second communication network.

In 604, the mobile terminal uses the communication service based on the core network slice of the second communication network.

According to various embodiments, in other words, information about a core network slice by which a second communication network, e.g. a 5G network, provides a communication service to an application of a mobile terminal is transmitted to the mobile terminal by a first communication network (which does not provide the communication network by means of a core network slice but by means of a bearer), e.g. a 4G network. This information can be seen as information about the mapping of the bearer to a core network slice. The mobile terminal may run a plurality of applications and for each application, the method of figure 6 may be performed.

For example, there is a mechanism to provide slice information for a mobile terminal (i.e. a UE in case of 4G and 5G communication networks) during PDU session establishment in EPC by the PGW-C + SMF. The UE may then map the EPS bearer to the core network slice for interworking with the 5G core network.

According to various embodiments, the method of figure 5 allows a UE to move freely between a 4G communication network and a 5G communication network without having any service interruption i.e. having session continuity. It for example allows the UE to select a 5G core network slice during the 4G attach procedure, thus e.g. allowing session continuity.

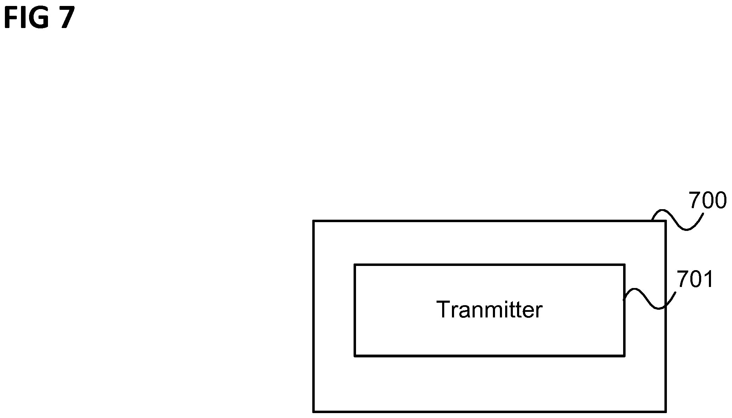

The method of figure 6 is for example implemented by means of a communication network component as illustrated in figure 7.

Figure 7 shows a communication network component 700.

The communication network component 700 is of a first communication network and comprises a transmitter 701 configured to transmit, for a mobile terminal running an application, wherein the first communication network provides a communication service to the application using a bearer between the mobile terminal and a core network of the first communication network, to the mobile terminal an identification of a core network slice of a second communication network, wherein the core network slice is to be used when providing the communication service to the application by means of the second communication network. The communication network component may for example comprise a determiner configured to determine the identification of the core network slice. It may also comprise a selector configured to select the core network slice, e.g. based on a core network slice type and a core network slice selection policy.

The components of the communication network component (e.g. the transmitter) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".
While specific aspects have been described, it should be understood by those skilled in the art that various changes in form and detail may be made therein without departing from the scope of the aspects of this disclosure as defined by the appended claims. The scope is thus indicated by the appended claims and all changes which come within the meaning of the claims are therefore intended to be embraced.

## Claims

1. A method for providing a communication service comprising:
a mobile terminal (301) running an application,
a first communication network providing a communication service to the application using a bearer between the mobile terminal (301) and a core network of the first communication network;
a Network Gateway (309) of the first communication network transmitting to the mobile terminal (301), via Protocol Configuration Option, PCO, an identification of a core network slice of a second communication network, wherein the core network slice is to be used when providing the communication service to the application by means of the second communication network; and
the mobile terminal (301) using the communication service based on the core network slice of the second communication network;
wherein the Network Gateway (309) of the first communication network is a Packet Data Network Gateway Control Plane and Session Management Function.

2. The method according to claim 1, further comprising the mobile terminal (301) stopping using the communication service based on the first communication network when starting using the communication service based on the core network slice of the second communication network.

3. The method according to claim 1 or 2, further comprising performing a handover of the mobile terminal (301) from the first communication network to the second communication network.

4. The method according to claim 3, wherein the handover comprises a handover from a radio access network of the first communication network to a radio access network of the second communication network.

5. The method according to any one of claims 1 to 4, wherein the identification of the core network slice is transmitted to the mobile terminal (301) by a network component belonging to both the core network of the first communication network and the core network of the second communication network;
wherein the network component belonging to both the core network of the first communication network and the core network of the second communication network is a Packet Data Network Gateway Control Plane and Session Management Function (309).

6. The method according to claim 5, comprising the network component determining a type of the core network slice.

7. The method according to any one of claims 1 to 6, comprising the mobile terminal (301) storing an association of the application with the core network slice.

8. The method according to any one of claims 1 to 7, comprising transmitting the identification of the core network slice during session establishment in the first communication network.

9. The method according to claim 8, wherein the session establishment comprises the establishment of a session allowing the application to use the communication service.

10. The method according to any one of claims 1 to 9, wherein the first communication network is a 4G communication network and the second communication network is a 5G communication network.

11. The method according to claim 10, wherein the bearer is an EPS bearer.

12. The method according to claim 10 or 11, wherein the bearer is a connection between the mobile terminal (301) and a Packet Data Network Gateway.

13. The method according to any one of claims 10 to 12, wherein the application is associated with an access point name of the 4G communication network.

14. A communication network component of a first communication network comprising:
a transmitter (701) configured to transmit, for a mobile terminal running an application, wherein the first communication network provides a communication service to the application using a bearer between the mobile terminal (301) and a core network of the first communication network, to the mobile terminal (301), via Protocol Configuration Option, PCO, an identification of a core network slice of a second communication network, wherein the core network slice is to be used when providing the communication service to the application by means of the second communication network,
wherein the communication network component is a Network Gateway (309) of the first communication network;
wherein the Network Gateway (309) is a Packet Data Network Gateway Control Plane and Session Management Function.

15. A mobile terminal (301) comprising:
a processor configured to run an application,
a transceiver configured to receive, via Protocol Configuration Option, PCO, from a Network Gateway (309) of a first communication network providing a communication service to the application using a bearer between the mobile terminal (301) and a core network of the first communication network, an identification of a core network slice of a second communication network, wherein the core network slice is to be used when providing the communication service to the application by means of the second communication network,
wherein the transceiver configured to use the communication service based on the core network slice of the second communication network;
wherein the Network Gateway (309) is a Packet Data Network Gateway Control Plane and Session Management Function.

## Patentansprüche

1. Ein Verfahren zum Bereitstellen eines Kommunikationsdiensts aufweisend:
dass ein mobiles Endgerät (301) eine Anwendung ausführt, dass ein erstes Kommunikationsnetzwerk einen Kommunikationsdienst der Anwendung bereitstellt verwendend einen Träger zwischen dem mobilen Endgerät (301) und einem Kernnetzwerk des ersten Kommunikationsnetzwerks;
dass ein Netzwerk-Gateway (309) des ersten Kommunikationsnetzwerks eine Identifizierung eines Kernnetzwerk-Teils eines zweiten Kommunikationsnetzwerks übermittelt zu dem mobilen Endgerät (301) mittels einer Protokoll-Konfigurationsoption, PCO, wobei der Kernnetzwerk-Teil verwendet wird, wenn der Anwendung der Kommunikationsdienst bereitgestellt wird mittels des zweiten Kommunikationsnetzwerks; und
dass das mobile Endgerät (301) den Kommunikationsdienst verwendet basierend auf dem Kernnetzwerk-Teil des zweiten Kommunikationsnetzwerks;
wobei das Netzwerk-Gateway (309) des ersten Kommunikationsnetzwerks eine Paketdaten-Netzwerk-Gateway-Steuerebene und Sitzungsverwaltung-Funktion ist.

2. Das Verfahren gemäß Anspruch 1, ferner aufweisend:
dass das mobile Endgerät (301) stoppt, den Kommunikationsdienst zu verwenden basierend auf dem ersten Kommunikationsnetzwerk, wenn beginnend, den Kommunikationsdienst zu verwenden basierend auf dem Kernnetzwerk-Teil des zweiten Kommunikationsnetzwerks.

3. Das Verfahren gemäß Anspruch 1 oder 2, ferner aufweisend Durchführen einer Übergabe des mobilen Endgeräts (301) von dem ersten Kommunikationsnetzwerk zu dem zweiten Kommunikationsnetzwerk.

4. Das Verfahren gemäß Anspruch 3, wobei die Übergabe eine Übergabe von einem Funkzugangsnetzwerk des ersten Kommunikationsnetzwerks zu einem Funkzugangsnetzwerk des zweiten Kommunikationsnetzwerk aufweist.

5. Das Verfahren gemäß irgendeinem der Ansprüche 1 bis 4, wobei die Identifizierung des Kernnetzwerk-Teils übermittelt wird zu dem mobilen Endgerät (301) mittels einer Netzwerkkomponente, welche zu sowohl dem Kernnetzwerk des ersten Kommunikationsnetzwerks als auch dem Kernnetzwerk des zweiten Kommunikationsnetzwerks gehört;
wobei die Netzwerkkomponente, die zu sowohl dem Kernnetzwerk des ersten Kommunikationsnetzwerks und dem Kernnetzwerk des zweiten Kommunikationsnetzwerks gehört, eine Paketdaten-Netzwerk-Gateway-Steuerebene und Sitzungsverwaltung-Funktion (309) ist.

6. Das Verfahren gemäß Anspruch 5, aufweisend, dass die Netzwerkkomponente einen Typ des Kernnetzwerk-Teils ermittelt.

7. Das Verfahren gemäß irgendeinem der Ansprüche 1 bis 6, aufweisend, dass das mobile Endgerät (301) eine Assoziierung der Anwendung mit dem Kernnetzwerk-Teil speichert.

8. Das Verfahren gemäß irgendeinem der Ansprüche 1 bis 7, aufweisend: Übermitteln der Identifizierung des Kernnetzwerk-Teils während eines Sitzungsetablierung in dem ersten Kommunikationsnetzwerk.

9. Das Verfahren gemäß Anspruch 8, wobei die Sitzungsetablierung die Etablierung einer Sitzung aufweist, welche der Anwendung erlaubt, den Kommunikationsdienst zu nutzen.

10. Das Verfahren gemäß irgendeinem der Ansprüche 1 bis 9, wobei das erste Kommunikationsnetzwerk ein 4G-Kommunikationsnetzwerk ist und das zweite Kommunikationsnetzwerk ein 5G-Kommunikationsnetzwerk ist.

11. Das Verfahren gemäß Anspruch 10, wobei der Träger ein EPS-Träger ist.

12. Das Verfahren gemäß Anspruch 10 oder 11, wobei der Träger eine Verbindung zwischen dem mobilen Endgerät (301) und einem Paketdaten-Netzwerk-Gateway ist.

13. Das Verfahren gemäß irgendeinem der Ansprüche 10 bis 12, wobei die Anwendung assoziiert ist mit einem Zugangspunktnamen des 4G-Kommunikationsnetzwerks.

14. Eine Kommunikationsnetzwerk-Komponente eines ersten Kommunikationsnetzwerks, aufweisend:
einen Transmitter (701) eingerichtet zum Übermitteln, für ein mobiles Endgerät ausführend eine Anwendung, wobei das erste Kommunikationsnetzwerk der Anwendung einen Kommunikationsdienst bereitstellt verwendend einen Träger zwischen dem mobilen Endgerät (301) und einem Kernnetzwerk des ersten Kommunikationsnetzwerks, einer Identifizierung eines Kernnetzwerk-Teils eines zweiten Kommunikationsnetzwerks zu dem mobilen Endgerät (301) mittels einer Protokoll-Konfigurationsoption, PCO, wobei der Kernnetzwerk-Teil verwendet wird, wenn der Anwendung der Kommunikationsdienst bereitgestellt wird mittels des zweiten Kommunikationsnetzwerks,
wobei die Kommunikationsnetzwerk-Komponente ein Netzwerk-Gateway (309) des ersten Kommunikationsnetzwerks ist;
wobei das Netzwerk-Gateway (309) eine Paketdaten-Netzwerk-Gateway-Steuerebene und Sitzungsverwaltung-Funktion ist.

15. Ein mobiles Endgerät (301), aufweisend:
einen Prozessor eingerichtet zum Ausführen einer Anwendung,
einen Transceiver eingerichtet zum Empfangen mittels einer Protokoll-Konfigurationsoption, PCO, von einem Netzwerk-Gateway (309) eines ersten Kommunikationsnetzwerks bereitstellend der Anwendung einen Kommunikationsdienst verwendend einen Träger zwischen dem mobilen Endgerät (301) und einem Kernnetzwerk des ersten Kommunikationsnetzwerks, einer Identifizierung eines Kernnetzwerk-Teils des zweiten Kommunikationsnetzwerks, wobei der Kernnetzwerk-Teil verwendet wird, wenn der Anwendung der Kommunikationsdienst bereitgestellt wird mittels des zweiten Kommunikationsnetzwerks,
wobei der Transceiver eingerichtet ist zum Verwenden des Kommunikationsdiensts basierend auf dem Kernnetzwerk-Teil des zweiten Kommunikationsnetzwerks;
wobei das Netzwerk-Gateway (309) eine Paketdaten-Netzwerk-Gateway-Steuerebene und Sitzungsverwaltung-Funktion ist.

## Revendications

1. Procédé de fourniture d'un service de communication, comprenant :
un terminal mobile (301) exécutant une application ;
un premier réseau de communication fournissant un service de communication à l'application, en utilisant une porteuse entre le terminal mobile (301) et un réseau central du premier réseau de communication ;
une passerelle de réseau (309) du premier réseau de communication transmettant, au terminal mobile (301), par l'intermédiaire d'une option de configuration de protocole, PCO, une identification d'une tranche de réseau central d'un second réseau de communication, dans lequel la tranche de réseau central doit être utilisée dans le cadre de la fourniture du service de communication, à l'application, au moyen du second réseau de communication ; et
le terminal mobile (301) utilisant le service de communication sur la base de la tranche de réseau central du second réseau de communication ;
dans lequel la passerelle de réseau (309) du premier réseau de communication est une fonction de gestion de session et de plan de commande de passerelle de réseau de données par paquets.

2. Procédé selon la revendication 1, comprenant en outre l'étape dans laquelle le terminal mobile (301) arrête d'utiliser le service de communication sur la base du premier réseau de communication lorsqu'il commence à utiliser le service de communication sur la base de la tranche de réseau central du second réseau de communication.

3. Procédé selon la revendication 1 ou 2, comprenant en outre l'étape consistant à mettre en œuvre un transfert intercellulaire du terminal mobile (301), du premier réseau de communication au second réseau de communication.

4. Procédé selon la revendication 3, dans lequel le transfert intercellulaire comprend un transfert intercellulaire d'un réseau d'accès radio, du premier réseau de communication à un réseau d'accès radio du second réseau de communication.

5. Procédé selon l'une quelconque des revendications 1 à 4, dans lequel l'identification de la tranche de réseau central est transmise au terminal mobile (301) par un composant de réseau appartenant à la fois au réseau central du premier réseau de communication et au réseau central du second réseau de communication ;
dans lequel le composant de réseau appartenant à la fois au réseau central du premier réseau de communication et au réseau central du second réseau de communication est une fonction de gestion de session et de plan de commande de passerelle de réseau de données par paquets (309).

6. Procédé selon la revendication 5, comprenant l'étape dans laquelle le composant de réseau détermine un type de la tranche de réseau central.

7. Procédé selon l'une quelconque des revendications 1 à 6, comprenant l'étape dans laquelle le terminal mobile (301) stocke une association de l'application à la tranche de réseau central.

8. Procédé selon l'une quelconque des revendications 1 à 7, comprenant l'étape consistant à transmettre l'identification de la tranche de réseau central dans le cadre d'un établissement de session dans le premier réseau de communication.

9. Procédé selon la revendication 8, dans lequel l'établissement de session comprend l'établissement d'une session permettant à l'application d'utiliser le service de communication.

10. Procédé selon l'une quelconque des revendications 1 à 9, dans lequel le premier réseau de communication est un réseau de communication 4G et le second réseau de communication est un réseau de communication 5G.

11. Procédé selon la revendication 10, dans lequel la porteuse est une porteuse EPS.

12. Procédé selon la revendication 10 ou 11, dans lequel la porteuse est une connexion entre le terminal mobile (301) et une passerelle de réseau de données par paquets.

13. Procédé selon l'une quelconque des revendications 10 à 12, dans lequel l'application est associée à un nom de point d'accès du réseau de communication 4G.

14. Composant de réseau de communication d'un premier réseau de communication comprenant :
un émetteur (701) configuré de manière à transmettre, pour un terminal mobile exécutant une application, dans lequel le premier réseau de communication fournit un service de communication à l'application, en utilisant une porteuse entre le terminal mobile (301) et un réseau central du premier réseau de communication, au terminal mobile (301), par l'intermédiaire d'une option de configuration de protocole, PCO, une identification d'une tranche de réseau central d'un second réseau de communication, dans lequel la tranche de réseau central doit être utilisée dans le cadre de la fourniture du service de communication, à l'application, au moyen du second réseau de communication ;
dans lequel le composant de réseau de communication est une passerelle de réseau (309) du premier réseau de communication ;
dans lequel la passerelle de réseau (309) est une fonction de gestion de session et de plan de commande de passerelle de réseau de données par paquets.

15. Terminal mobile (301) comprenant :
un processeur configuré de manière à exécuter une application ;
un émetteur-récepteur configuré de manière à recevoir, par l'intermédiaire d'une option de configuration de protocole, PCO, en provenance d'une passerelle de réseau (309) d'un premier réseau de communication fournissant un service de communication, à l'application, en utilisant une porteuse entre le terminal mobile (301) et un réseau central du premier réseau de communication, une identification d'une tranche de réseau central d'un second réseau de communication, dans lequel la tranche de réseau central doit être utilisée dans le cadre de la fourniture du service de communication, à l'application, au moyen du second réseau de communication ;
dans lequel l'émetteur-récepteur est configuré de manière à utiliser le service de communication sur la base de la tranche de réseau central du second réseau de communication ; et
dans lequel la passerelle de réseau (309) est une fonction de gestion de session et de plan de commande de passerelle de réseau de données par paquets.
